# EUROPEAN PATENT APPLICATION

(11) **EP 1 833 245 A2**
(43) Date of publication of application: **12.09.2007**
(21) Application number: 07101780.0
(22) Date of filing: 06.02.2007
(51) Int. Cl.: H04N 5/445

(54) **System and method for providing information on digital broadcasting programs**

(30) Priority: 06.03.2006 KR 20060020992
(71) Applicant: Samsung Electronics Co., Ltd., Suwon-si, Gyeonggi-Do (KR)
(72) Inventor: Jeon, Jin-Woo, Suwon-si Gyeonggi-do (KR); Kim, Young-Jip, Suwon-si Gyeonggi-do (KR); Han, Young-Seop, Suwon-si Gyeonggi-do (KR)
(74) Representative: Zimmer, Franz-Josef

(57) **Abstract**

In a system and method for providing digital broadcasting program information, a broadcasting information service provider receives EPG data and user-desired broadcasting program information, and extracts the broadcasting information of the digital broadcasting program corresponding to the desired broadcasting program information. The service provider transmits a message including the extracted information to existing subscribers in accordance with each subscriber's information. The subscribers' terminal extracts broadcasting information from the message. Ultimately, a user can easily obtain the information on his/her own desired broadcasting programs, to watch the program or make a setting reservation.

## Description

The present invention relates generally to a digital broadcasting service, and more particularly to a system and method for providing information on user-preferred digital broadcasting programs.

Digital Multimedia Broadcasting (hereinafter DMB) refers to a broadcasting service that uses digital data to provide high-definition moving pictures. This digital broadcasting includes various types of broadcasting methods that provide moving picture services with digital data, such as Digital Video Broadcasting-Handled (DVB-H), MediaFLO, terrestrial DMB and satellite DMB.

An Electronic Program Guide (EPG) service refers to a service that allows viewers to see information on broadcasting programs in which a broadcasting station providing the digital broadcasting programs offers viewer diverse information on broadcasting in the form of a broadcast program guide. Specifically, the EPG service provides viewers with information on present broadcasting programs, broadcasting channels and starting and ending of each broadcasting program to be provided in the future.

This information is transmitted along with broadcasting moving picture data for real broadcasting at DMB stations. Thus, a digital broadcast receiving terminal receives this information and creates information on programs broadcasted by the broadcasting station using the received information, and then stores the broadcasting program information in a memory. Further, the digital broadcast receiving terminal outputs the broadcasting program information in a list classified according to times and channels, as desired by the viewer. Hereinafter, the information that the digital broadcast receiving terminal has received from the DMB station in order to create the broadcasting program information and the list, will be called EPG data. Using the EPG data, a user can choose and watch a program that the user so desires to watch, making the EPG data a type of guide information on digital broadcasting programs.

However, due to the prolific development of the broadcasting technology, digital broadcasting channels also have rapidly increased, causing more difficulty for the user to find the program he/she desires. Accordingly, it is often difficult for a user to find programs he/she desires to watch.

Accordingly, the present invention has been developed to solve the above-mentioned problem occurring in the art, and it is the object of the present invention to provide a system and a method for providing digital broadcasting program information, which allows a user to easily receive information on digital broadcasting programs that the user prefers.

This object is solved by the invention as claimed in the independent claims.

Preferred embodiments are specified in the dependent claims.

According to the present invention, there is provided a system for providing information on a user's favorite DMB program to the user, including a digital broadcasting station for broadcasting digital broadcasting data corresponding to various broadcasting programs and EPG data, a broadcasting information service provider for receiving and storing the favorite broadcasting program information from existing subscribers, extracting a broadcasting program corresponding to the favorite broadcasting program from the EPG date, and creating a broadcasting information message containing the broadcasting information corresponding to specific information of an extracted broadcasting program so as to transmit the broadcasting information message to subscribers, and a terminal for receiving the broadcasting information message so as to extract the broadcasting information corresponding to the favorite broadcasting program from the received broadcasting information message.

According to the present invention, there is provided a method for providing broadcasting program information in a system including a digital broadcasting station for broadcasting DMB data and EPG data regarding the broadcasting program, a broadcasting information service provider for generating a broadcasting information message including the proper broadcasting information of the broadcasting program which the existing subscribers selected, and a digital broadcasting receiving terminal for receiving and extracting the broadcasting information, the method including allowing the broadcasting information service provider to receive the EPG data, enabling the broadcasting service provider to search for the broadcasting program according to the sort of broadcasting program that the existing users selects and to extract the broadcasting information corresponding to the broadcasting program from the EPG data, enabling the broadcasting service provider to create and transmit a broadcasting information message including the extracted broadcasting information to the existing users, allowing the digital broadcasting receiving terminal to receive the broadcasting information message, enabling the digital broadcasting receiving terminal to extract the broadcasting information from the received broadcasting information message, and enabling the digital broadcasting receiving terminal to change a current channel to the channel through which a specific broadcasting program is broadcast using the extracted broadcasting information according to whether the present time is a time to broadcast the specific broadcasting program, or to reserve the specific broadcasting program.

The above and other objects, features, and advantages of the present invention will be more apparent from the following detailed description taken in conjunction with the accompanying drawings, in which:
FIG. 1 is a view illustrating a configuration of a system for providing digital broadcasting information according to the present invention;
FIG. 2 is a block diagram illustrating a broadcasting information service provider of the system for providing the broadcasting information according to the present invention, wherein the broadcasting information service provider transmits broadcasting information messages to the existing subscribers;
FIG. 3 is a flowchart illustrating an operational process of creating and transmitting a broadcasting information message in the system for providing the broadcasting information according to the present invention, wherein a broadcasting information service provider creates and transmits the broadcasting information message;
FIG. 4 is a block diagram illustrating a digital broadcasting receiving terminal in the system for providing the broadcasting information according to the present invention;
FIG. 5 is a flowchart illustrating an operational process of receiving and processing a message including broadcasting information, in which a digital broadcasting receiving terminal according to the present invention receives and processes the message including broadcasting information; and
FIG. 6 is a flowchart illustrating an operation of the digital broadcasting receiving terminal according to the present invention, in which the digital broadcasting receiving terminal identifies the broadcasting program information corresponding to the broadcasting information from the message when the message including the broadcasting information is received.

Hereinafter, the preferred embodiments of the present invention will be described in detail with reference to the accompanying drawings. The same reference numerals are used to denote the same structural elements throughout the drawings. In the following description of the present invention, the detailed description of known functions and configurations incorporated herein is omitted for the sake of clarity and conciseness.

First, the fundamental principle of the present invention will be described. In the present invention, the broadcasting information service provider receives EPG data from a digital broadcasting station, obtains, from the EPG data, information on broadcasting programs preferred by existing subscribers, and extracts broadcasting information on the digital broadcasting program corresponding to the favorite broadcasting program information. The broadcasting information service provider creates broadcasting information messages including the extracted broadcasting information so as to transmit messages according to the information on each user. A digital broadcasting receiving terminal of each of existing users extracts broadcasting information from the received broadcasting information messages, changes the channel into the one through which the user's favorite program is broadcast, or carries out setting of reservations for recording or viewing a broadcasting program. As a result, the user can easily obtain information on his/her favorite broadcasting program. Users can also watch their favorite broadcasting programs or make a reservation time for viewing the broadcasting program.

Here, the form of Short Message Service (SMS) messages and Multimedia Message Service (MMS) messages, which are used in universal mobile communication terminals, may be used in the broadcasting information message. Generally, these messages include destination information (recipient phone number), teleservice IDentifier (ID) or service number, user data and CallBack information (number to be answered) parameters. When these messages are used as a specific application service, the service can be supplied using a teleservice parameter among parameters in the messages. Particularly, a teleservice ID for each application is made in advance between transmitter and receiver. When specific the teleservice ID is transmitted, information such as the transmitted user data, destination information and CallBack information is used according to the aforementioned specific application.

For example, according to the Wireless Application Protocol (WAP) Push method which delivers messages from a WAP server to a mobile communication terminal, upon receiving and identifying a message including a teleservice ID and set to a WAP Push type message, a recipient mobile communication terminal provides a user with the received WAP Push type message. For example, the recipient mobile communication terminal recognizes CallBack information as a wireless Internet access address, and provides the user with the CallBack information.

A method of informing a recipient of the type of services of message transmitted using such a teleservice ID can be applied to the present invention. Next, a method of obtaining broadcasting information through the received message using the teleservice ID prescribed between the broadcasting information service provider and the recipient mobile communication terminal will be described.

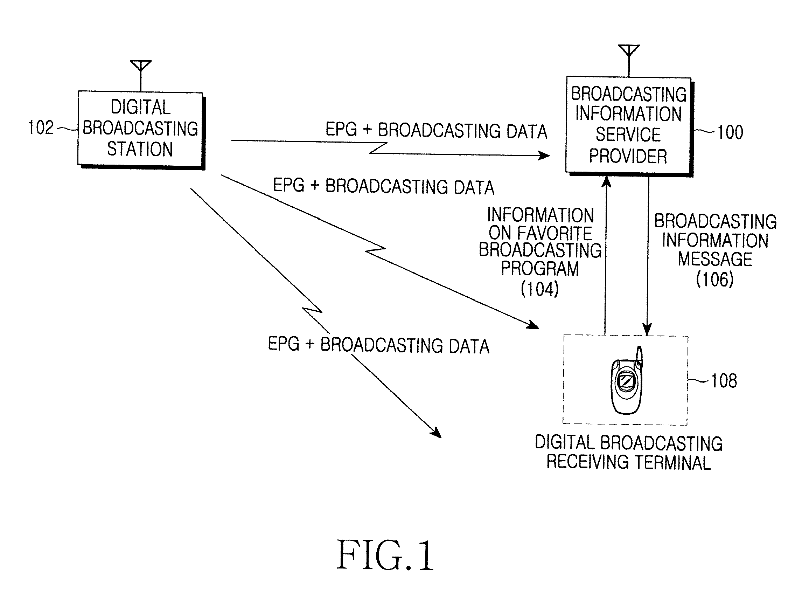

FIG. 1 is a view showing the broadcasting information providing system according to the present invention.

Referring to FIG. 1, the broadcasting information providing system includes a digital broadcasting station 102 which transmits various types of digital broadcasting data including EPG data, a broadcasting information service provider 100 which receives information on the favorite broadcasting programs from the existing subscribers, stores and extracts the broadcasting program information corresponding to the favorite broadcasting programs from the EPG data, and generates and transmits the broadcasting information message including the extracted broadcasting program information, a digital broadcasting receiving terminal 108 which receives the broadcasting information message and extracts the broadcasting program information corresponding to the favorite broadcasting program from received broadcasting information messages. Here, the broadcasting program data refers to broadcasting data that corresponds to each program included in the digital broadcasting.

The broadcasting information service provider 100 receives the information on the favorite broadcasting program 104 from the existing subscribers, as described above. Here, the information on the favorite broadcasting program 104 may be a type of broadcasting program the user selected, according to a classification such as film or sports, and a sub-type of the broadcasting program (e.g., adventure film or football game).

The broadcasting information service provider 100 stores the user-provided information on the favorite broadcasting program 104 according to each user. The broadcasting information service provider 100 receives EPG data and extracts broadcasting information on broadcasting programs corresponding to the favorite broadcasting program information which the existing subscribers provides. Here, the broadcasting information refers to the proper information of the broadcasting program.

In general, the proper information on the broadcasting program may be a corresponding broadcasting program service ID. In the case of satellite DMB, a channel selection method through EPG data can be accomplished by using the Program Specific Information (PSI) received from the digital multimedia station. Specifically, a digital broadcasting receiving terminal extracts both the broadcasting program service ID which the user selects through the PSI and the Packet Element Stream Packet ID (PES PID) corresponding to the service ID. Then, the digital broadcasting receiving terminal searches for the Walsh Code corresponding to the information on the extracted PES PID, establishes the searched Walsh Code at a baseband processor, and enables the baseband processor to select and receive only the digital broadcasting data including the extracted PES PID. Therefore, with satellite DMB, the service ID can be used as a keyword to allow the user to receive only the digital broadcasting data of the broadcasting program that a user selects, and can also be the proper information of the broadcasting program.

Meanwhile, with a terrestrial DMB channel establishment, a digital broadcasting receiving terminal receives the Multiplex Configuration Information (MCI) and Service Information (SI) (MCI/SI) information received from the terrestrial digital multimedia broadcasting station, tunes frequency of the user's digital broadcasting receiving terminal to the broadcasting channel frequency the user prefers and receives the digital broadcasting data through the tuned frequency. Further, the digital broadcasting receiving terminal creates the channel by setting the Walsh code, which corresponds to PES PID with respect to the service ID of the broadcasting program which the user selects from the received digital broadcasting data, at the baseband processor. Then, the digital broadcasting receiving terminal receives only the digital broadcasting data of the channel which the user selected through the Walsh code. Therefore, with terrestrial DMB, the service ID may also be proper information of the broadcasting program and keywords which allow the digital broadcasting receiving terminal to receive only the digital broadcasting data of broadcasting program which the user selects. Accordingly, in terrestrial DMB similar to the satellite DMB, service ID may also be proper information of a specific broadcasting program. Therefore, the service ID may be broadcasting information offered by the broadcasting information service provider 100.

The broadcasting information service provider 100 receives EPG data from the digital broadcasting station 102, extracts only the broadcasting information corresponding to the favorite broadcasting program which the user provides to create a broadcasting information message 106 containing the broadcasting information according to the existing message format, which may be a message form adopted to a conventional mobile communication terminal.

Further, for the benefit of transmitting the broadcasting information, the broadcasting information service provider 100 inserts the teleservice IDs, which are set in advance to the terminals of the existing subscribers, into the broadcasting information message 106 and also transmits the broadcasting information message 106 including the broadcasting information to each subscriber according to each subscribers' information. Then, the digital broadcasting receiving terminal 108 receives the broadcasting information messages 106 and extracts the above-mentioned broadcasting information from the received broadcasting information message. The user can identify the broadcasting information, and thereby also change the current channel into another channel through which his/her favorite broadcasting program is broadcast or carry out the reservation for the broadcasting program that the user prefers.

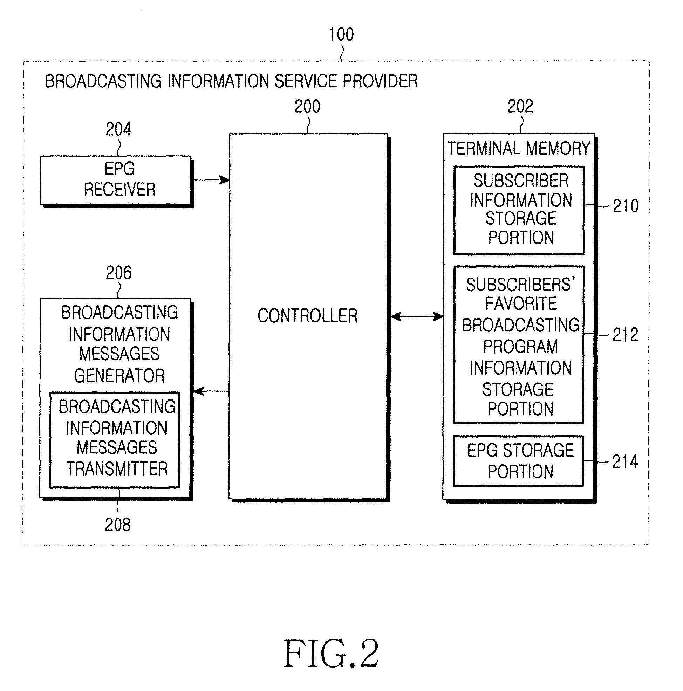

FIG. 2 is a block diagram illustrating a broadcasting information service provider sending a broadcasting information message to the existing subscribers in the broadcasting information providing system according to the present invention.

Referring to FIG. 2, the broadcasting information service provider 100 includes a controller 200, a memory 202 connected to the controller 200, an EPG receiver 204 and a broadcasting information messages generator 206. When the controller 200 receives EPG data through the EPG receiver 204, the controller 200 stores the EPG data in the memory 202 and loads the favorite broadcasting program information stored in the memory 202 according to the existing subscriber (hereinafter subscriber) and the subscribers' information. Here, the broadcasting information service provider 100 obtains the favorite broadcasting program information from the users when the users join the broadcasting information service according to the present invention, and can update user information on favorite broadcasting programs when the users have already joined the broadcasting information service.

Then, the controller 200 extracts the broadcasting program information corresponding to the favorite broadcasting program information according to the subscribers from the received EPG data, classifies the extracted broadcasting program information according to the subscribers, and outputs the classified data with the loaded information according to the subscribers through the broadcasting information message generator 206.

The broadcasting information message generator 206 generates the message containing the extracted broadcasting program information in the preset form of message by using information on the subscribers. Here, the broadcasting information message generator 206 inserts the preset teleservice ID into the digital broadcasting receiving terminal that receives the message containing the broadcasting information to generate the broadcasting information message and sends the generated broadcasting information message to each subscriber through the broadcasting information message transmitter 208 included in the broadcasting information message generator 206.

The memory 202 connected to the controller 200 includes storage areas for subscriber information including telephone numbers, personal information the preferred broadcasting program information of each subscriber. The memory 202 also stores the received EPG data. Hereinafter, the area for storing the subscriber information is referred to as the subscriber information storage portion 210, the area for storing the subscriber favorite broadcasting program information is referred to as the subscribers' favorite broadcasting program information storage portion 212, and the area for storing the EPG data is referred to as EPG storage portion 214.

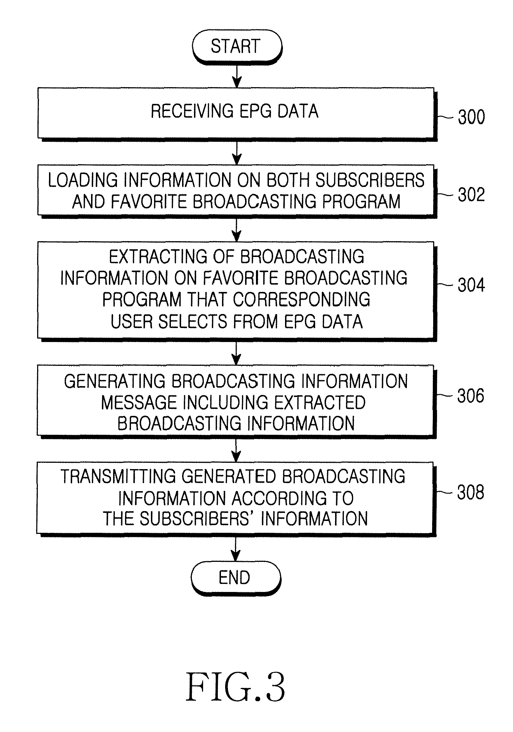

FIG. 3 is a flowchart illustrating an operational process of creating and transmitting a broadcasting information message in the broadcasting information providing system according to the present invention.

Referring to FIG. 3, the controller 200 of broadcasting information service provider 100 proceeds to step 300 to receive EPG data. In step 302, the controller 200 loads the subscriber information and the favorite broadcasting program information offered by the each subscriber from the subscriber information storage portion 210 and the subscribers' favorite broadcasting program information storage portion 212, respectively. In step 304 the controller 200 extracts, from the received EPG data according to each subscriber, the broadcasting information on the favorite broadcasting program the corresponding subscriber selects.

After extracting, the controller 200 proceeds to step 306 to generate the broadcasting information message including the above-mentioned broadcasting information. The following Table 1 shows the configuration of the broadcasting information message that is generated at step 306.

**Table 1**

| | |
|---|---|
| receiver information | 012-345-678-0000 |
| teleservice ID | 12345 |
| User data | broadcasting information |

In this case, the controller 200 can send the subscriber the broadcasting information on the favorite broadcasting program that the user selects. Then, the subscriber's digital broadcasting receiving terminal 108 can search for the information on the corresponding broadcasting program using the broadcasting information, change the channel to the corresponding channel of the broadcasting program, and reserve a setting such as a viewing reservation or a recording reservation of the corresponding broadcasting program, according to the user's selection.

However, if the broadcasting information service provider 100 transmits only broadcasting information, the subscriber's digital broadcasting receiving terminal 108 has to search again for the broadcasting program information according to the broadcasting information.

Accordingly, the controller 200 can insert not only the broadcasting information but also the broadcasting program information equivalent to the corresponding broadcasting information, such as information on the corresponding broadcasting program service provider, the title of the corresponding broadcasting program, and the information on the starting time and broadcasting duration of the corresponding broadcasting program, into the broadcasting information message, which message is transmitted. Then, the digital broadcasting receiving terminal 108 receives the message. As a result, the digital broadcasting receiving terminal 108 receives the corresponding broadcasting program information when it receives the broadcasting information message. Hence, the digital broadcasting receiving terminal 108 does not need to search the EPG data again for the broadcasting program included in the broadcasting information message. Tables 2, 3 and 4 show the configuration of the broadcasting information message when the controller 200 transmits the message including at least a portion of the additional information on the broadcasting program.

**Table 2**

| | |
|---|---|
| receiver information | 012-345-678-0000 |
| teleservice ID | 12345 |
| User data | broadcasting information + channel information |

**Table 3**

| | |
|---|---|
| Receiver information | 012-345-678-0000 |
| teleservice ID | 12345 |
| User data | broadcasting information + broadcasting program title |

**Table 4**

| | |
|---|---|
| Receiver information | 012-345-678-0000 |
| teleservice ID | 12345 |
| User data | broadcasting information + starting time + broadcasting duration |

**Table 5**

| | |
|---|---|
| Receiver information | 012-345-678-0000 |
| teleservice ID | 12345 |
| User data | broadcasting information+channel information + broadcasting program title + starting time + broadcasting duration |

Accordingly, when the broadcasting information message is composed as described in Tables 2 to 5, it is unnecessary for the digital broadcasting receiving terminal 108 to search the EPG data in order to display the additional information to users. Moreover, when a broadcasting information message is constructed as described in Table 5, the digital broadcasting receiving terminal 108 no longer needs to search the EPG data because the digital broadcasting receiving terminal 108 includes all the information on the channel, starting time and broadcasting duration when the corresponding broadcasting information is broadcast. Therefore, the digital broadcasting receiving terminal 108 provides the user with the ability to change the current channel to another channel on which the broadcasting program that the user desires is broadcast, and to reduce the time for reserving the corresponding broadcasting program.
As described above, if the broadcasting information message is generated according to each subscriber in step 306, the controller 200 proceeds to step 308 and transmits each subscriber the generated broadcasting information message above according to the subscriber's information. Therefore, the broadcasting information service provider 100 can extract information on the broadcasting program that each subscriber desires to watch, and transmit the information to each subscriber. The digital broadcasting receiving terminal 108 can change the channel or set a reservation by using the information.

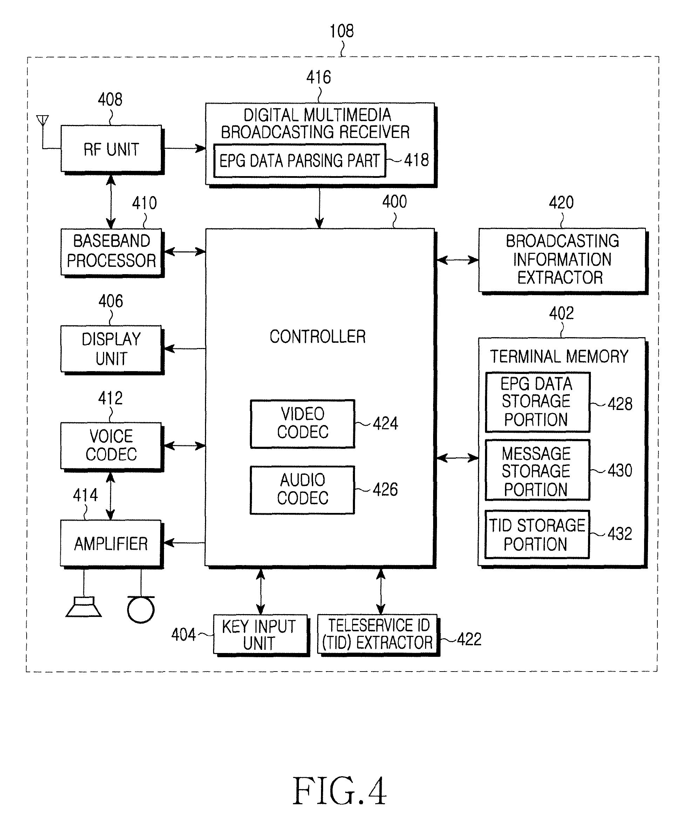

FIG. 4 is a block diagram illustrating the configuration of a digital broadcasting receiving terminal 108 according to the present invention.

Referring to FIG. 4, the digital broadcasting receiving terminal 108 includes a terminal memory 402, a key input unit 404, a display unit 406, a baseband processor 410, a voice codec (CODEC:Coder-Decoder) 412, an amplifier 414, a broadcasting information extractor 420, a digital multimedia broadcasting receiver 416, a Teleservice ID (TID) extractor 422 and a terminal controller 400 to which they are connected. Here, the terminal controller 400 processes an audio signal and data according to the protocol for telephone calls, data communication, wireless Internet access and digital broadcasting, and also controls each part of the digital broadcasting receiving terminal. The terminal controller 400 receives the digital broadcasting data as well as the EPG data from the digital multimedia broadcasting receiver 416, stores the EPG data in the terminal memory 402, and generates a broadcasting program guide according to a user's request.

Further, the terminal controller 400 decodes the input digital broadcasting signal into an audio or video signal when a user chooses digital broadcasting viewing and outputs the signal through the display unit 406 or the amplifier 414. The terminal controller 400 receives a user's key input from the key input unit 404 to control the display unit 406 and provide picture information.

Furthermore, upon receiving the message including broadcasting information from the broadcasting information service provider 100, the terminal controller 400 allows a user to change the channel depending on the corresponding broadcasting information, view the broadcasting program at a specific time and make a recording reservation. Here, the terminal controller 400 can extract a teleservice ID from the received message through the TID extractor 422 and use the extracted teleservice ID to identify whether the message includes the broadcasting information.

If the extracted teleservice ID corresponds to the broadcasting information message, the terminal controller 400 extracts therefrom the broadcasting information. The terminal controller 400 also identifies whether the present time is when the broadcasting program corresponding to the broadcasting information is broadcast, and then changes the current channel to another channel through which the corresponding broadcasting program is broadcast, or sets reservation on the corresponding broadcasting program according to the user's selection.

The terminal memory 402 includes an EPG data storage portion 428, a message storage portion 430, and a TID storage portion 432 for storing the information on the teleservice ID. The terminal memory 402 includes Read Only Memory (ROM), Flash Memory and Random Access Memory (RAM). The ROM stores various reference data as well as programs for process and control of the terminal controller 400. The RAM is used as a working memory for the terminal controller 400, and the Flash memory provides the region for storing the diverse updatable data.

When the received message is a broadcasting information message, the broadcasting information extractor 420 extracts the information on the broadcasting program corresponding to the broadcasting information. The extracted broadcasting program information may be changed according to the information contained in the broadcasting information message. For example, if a broadcasting information message is constructed as shown in Table 1, the broadcasting information extractor 420 must extract information such as the title of the broadcasting program according to the corresponding broadcasting information, the channel through which the corresponding broadcasting program is broadcast, and the starting time and broadcasting duration of the corresponding broadcasting program. However, if a broadcasting message includes the information shown in Table 5, it may be unnecessary for the broadcasting information extractor 420 to extract the information from the EPG data. Therefore, when a broadcasting information message is constructed as shown in TABLE 5, the broadcasting information extractor 420 can reduce the time spent extracting the broadcasting program information according to the corresponding broadcasting information.

The key input unit 404 includes various types of keys such as numeric keys, and provides the terminal controller 400 with the key input from a user. An RF unit 408 transmits and receives an RF signal to/from a base station in order to place telephone calls and exchange messages, and receives digital multimedia broadcasting signals. The RF unit 408 also converts signals from a base station into Intermediate Frequency (IF) signals to output the signals through the baseband processor, and converts the IF signals input from the baseband processor 410 into RF signals for transmission. When a user chooses to receive digital broadcasting data, the RF unit 408 receives the digital broadcasting data and outputs the data into the baseband processor 410 connected thereto.

The baseband processor 410 is a Baseband Analog ASIC (BBA) that provides interface between the terminal controller 400 and the RF unit 408. The baseband processor 410 converts the baseband digital signals applied by the terminal controller 400 into analog IF signals to be supplied to the RF unit 408 and converts the analog IF signals into digital broadcasting data of the baseband to apply the data to the terminal controller 400. When a user chooses to receive digital broadcasting data, the baseband processor 410 receives the digital broadcasting data of the channel according to key input applied by the terminal controller 400 and outputs the received digital broadcasting data through the digital multimedia broadcasting receiver 416.

The digital multimedia broadcasting receiver 416 has an EPG data parsing unit 418. If the data packet for generating EPG data out of the digital broadcasting data is received, the digital multimedia broadcasting receiver 416 parses the data packet to generate EPG data and applies the generated EPG data to the terminal controller 400 which stores the EPG data in the EPG data storage portion 428. The digital multimedia broadcasting receiver 416 demultiplexes the digital broadcasting data which is input through the baseband processor 410, extracts the video and audio data of a user-selected channel from the demultiplexed digital broadcasting data, and applies the extracted video and audio data to the terminal controller 400. The terminal controller 400 applies the video and audio data to a video codec 424 and an audio codec 426 respectively to decode the data, and allows the digital broadcasting to be output. Then, the terminal controller 400 outputs the decoded video data through the display unit 406 and the decoded audio data through the amplifier 414. The display unit 406 outputs the video data of the digital broadcasting, while the amplifier 414 amplifies and outputs the audio data according to the volume gain set by the user.

The voice codec 412 linked with the terminal controller 400 is connected to a microphone and a speaker through the amplifier 414, and uses Pulse Code Modulation (PCM) to output the voice data through the terminal controller 400 by encoding the voice signal input from the microphone, as well as decode the voice data input from the terminal controller 400 while outputting the voice signal through the amplifier 414 to the speaker. The amplifier 414 amplifies the audio signal input from the microphone or output to the speaker by regulating the speaker volume and microphone gain according to the control of the terminal controller 400.

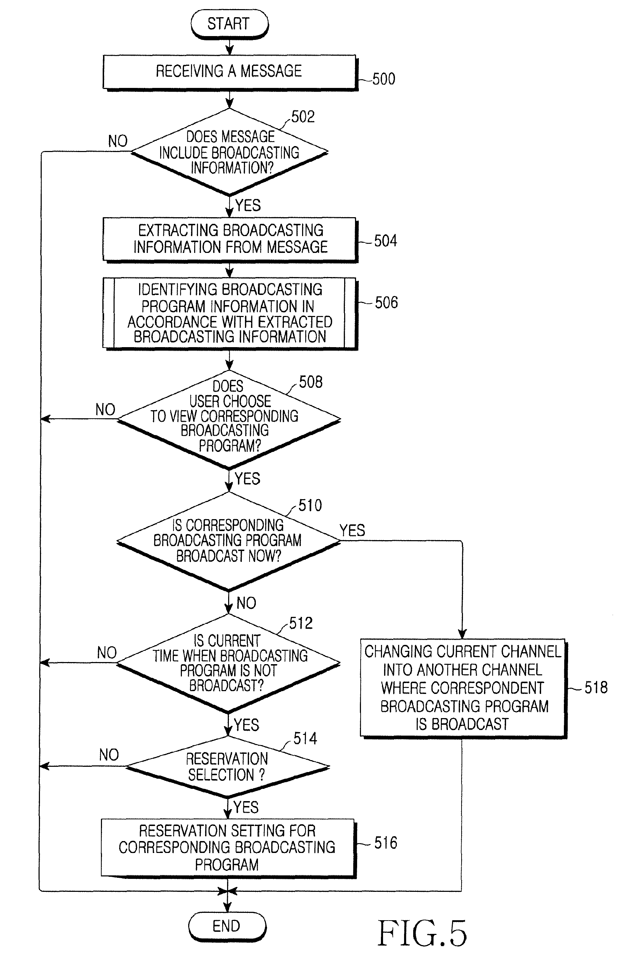

FIG. 5 is a flowchart illustrating an operational process of message transaction of a digital broadcasting receiving terminal 108 according to the present invention when the terminal receives messages including broadcasting information.

Referring to FIG. 5, the terminal controller 400 receives a message in step 500. The terminal controller 400 proceeds to step 502 to determine whether the input message at step 500 includes broadcasting information. Here, step 502 may be a process of detecting the TID included in the received message, and determining that the received message includes the broadcasting information if the detected TID is equivalent to the TID of message used for transmitting broadcasting information.

If it is determined that the message includes the broadcasting information at step 502, the terminal controller 400 proceeds to step 504 to extract the broadcasting information from the message. In step 506, the terminal controller identifies the broadcasting program information in accordance with the extracted broadcasting information. In step 506, the terminal controller 400 loads the stored EPG data to search for the broadcasting program corresponding to the broadcasting information and extract the information according to the searched broadcasting program.

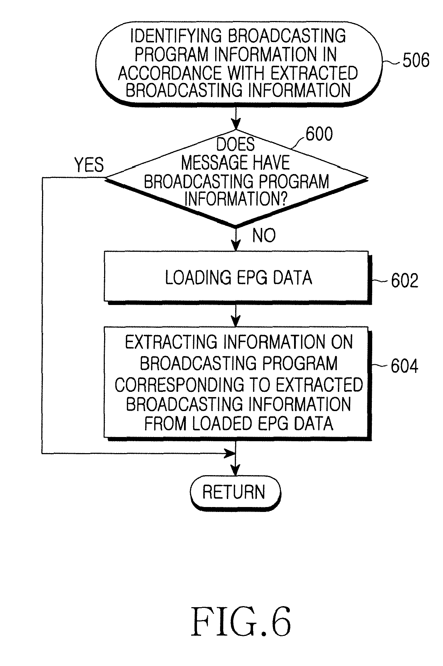

The process in step 506 may be changed according to the information that the received broadcasting information message contains as described above. In other words, at step 506, the terminal controller 400 must extract much more information on many broadcasting programs from the EPG data when the broadcasting information message constructed as described in Table 1 is received, as opposed to that described in Table 5. The process of extracting the broadcasting program information in accordance with whether the broadcasting information message includes the broadcasting program information will be described in more detail with reference to FIG. 6.

The terminal controller 400 which has extracted the broadcasting program information corresponding to the broadcasting information included in the message through the step 506, proceeds to step 508 to determine whether a user chooses to view the broadcasting program according to the broadcasting information message. If the user chooses to view the broadcasting program, the terminal controller 400 proceeds to step 510 to identify the starting time and broadcasting duration of the broadcasting program according to the broadcasting information, and compares the identified time and duration with the current time to determine whether the current time is when the broadcasting program is broadcast. If it is determined at step 510 that the current time is when the broadcasting program is broadcast, the terminal controller 400 proceeds to step 518 to change the current channel to another channel through which the broadcasting program is broadcast.

However, if it is determined at step 510 that the current time is not a time when the corresponding broadcasting program is broadcast, the terminal controller 400 proceeds to step 512 to determine whether the current time is when the broadcasting program is broadcast according to the broadcasting information. If it is determined that is the time is when the broadcasting program is not yet broadcasted, the terminal controller 400 proceeds to step 514 to ask the user whether a reservation for the corresponding broadcasting program will be selected. Here, the reservation setting refers to setting in which the user is allowed to watch a specific broadcasting program at a preset time or to record the broadcasting program at pre-arranged time.

As a result of the determination in step 514, if the user selects the reservation, the terminal controller 400 proceeds to step 516 to execute the reservation setting according to the user's selection. Therefore, if the message including broadcasting information is received from the broadcasting information service provider 100, it is possible to watch the specific broadcasting program or to execute the reservation setting through the present invention.

FIG. 6 is a flowchart illustrating an operation of the digital broadcasting receiving terminal according to the present invention

Referring to FIG. 6, after the terminal controller 400 extracts the broadcasting information from the broadcasting information message at step 504 and identifies broadcasting program information in accordance with the extracted broadcasting information in step 506, it proceeds to step 600 to determine whether the received broadcasting information message contains additional broadcasting program information. If it is determined that the message includes the broadcasting program information according to the broadcasting information, the terminal controller 400 extracts the broadcasting program information from the broadcasting information message and proceeds to step 508 to determine whether the user chooses to watch the broadcasting program in accordance with the extracted broadcasting information. Thus, in this case, it is unnecessary for the terminal controller 400 to separately extract the broadcasting program information corresponding to the broadcasting information from the EPG data. Here, the broadcasting program information refers to the additional information on the specific broadcasting program as described above, such as the channel where the specific broadcasting program is broadcast, the service provider of the specific broadcasting program, the title of the specific broadcasting program and the starting time and broadcasting duration of the specific broadcasting program.

However, as a result of the determination in step 600, if the message doesn't include the broadcasting program information according to the broadcasting information, the terminal controller 400 proceeds to step 602 to load the previously stored EPG data. The terminal controller 400 proceeds to step 604 to extract the information on the broadcasting program corresponding to the broadcasting information from the loaded EPG data. Therefore, in the present invention, although the information on the specific broadcasting program is not included in the message, the information on the broadcasting program can be extracted by using the broadcasting information.

The present invention allows a user to more conveniently obtain the digital broadcasting program information, activate the digital broadcasting, and reduce the time wasted when a user searches for his/her favorite broadcasting program directly through the menu.

Furthermore, a broadcasting operator or a communication operator, who functions as a broadcasting information service provider in the present invention, can use the present invention in order to induce users to join the specific broadcasting service. Specifically, the broadcasting information service provider generates and transmits the message containing the information on the specific broadcasting program to the user, so as to induce the user to join a specific broadcast service. The user is capable of viewing the broadcasting program according to the information included in the corresponding message or executing a reservation setting. Therefore, if the user is obliged to join the specific broadcasting service so as to view the broadcasting program, the broadcasting information service provider can also induce the user to join the specific broadcasting service by providing the broadcasting service information to the user. Accordingly, the present invention is effective for inducing users to join the specific broadcasting service.
Although the present invention has been described with respect to only SMS or MMS-type broadcasting information messages, Wireless Application Protocol (WAP) PUSH formatted messages can also be utilized since the WAP PUSH method also distinguishing types of services using the teleservice ID in a manner similar to that of the messaging method. That is, on the assumption that the teleservice ID: 12345 is a message used for WAP Alert as a specific application used in WAP and the contents of User Data include Text Data, delimiter and CallBack URL, the message shown in the following Table 6 may be generated.

**Table 6**

| | |
|---|---|
| receiver information | 012-345-678-0000 |
| teleservice ID | 65491 |
| User data | A new mail has arrived. http://www.wapmail.com |

Accordingly, WAP Alert Message can be transmitted in a manner similar to SMS message. Thus, a message in WAP PUSH method, which includes broadcasting information instead of the User Data, can also be transmitted according to the present invention.

While the invention has been shown and described with reference to certain preferred embodiments thereof, it will be understood by those skilled in the art that various changes in form and details may be made therein without departing from the scope of the invention as defined by the appended claims.

## Claims

1. A system for providing information on a user's desired Digital Multimedia Broadcasting, DMB, program to the user, the system comprising:
a digital broadcasting station for broadcasting digital broadcasting data corresponding to various broadcasting programs and Electronic Program Guide, EPG, data which is guide information on the broadcasting programs;
a broadcasting information service provider for receiving and storing the desired broadcasting program information from existing subscribers, extracting a broadcasting program corresponding to the desired broadcasting program from the EPG data, and creating a broadcasting information message including broadcasting information corresponding to specific information of the extracted broadcasting program so as to transmit the broadcasting information message to the subscribers; and
a terminal for receiving the broadcasting information message and extracting the broadcasting information corresponding to the desired broadcasting program from the received broadcasting information message.

2. The system as claimed in claim 1, wherein the broadcasting information service provider comprises:
an EPG receiver for receiving the EPG data;
a memory for storing the received EPG data, subscriber information on existing subscribers, and information on the broadcasting programs which the subscribers prefer;
a controller for receiving and storing the subscriber information and the desired broadcasting program information from the subscribers, detecting the desired broadcasting program from the received EPG data, and extracting the broadcasting information from the detected broadcasting program and outputting the extracted broadcasting information and the subscriber information; and
a generator for receiving the broadcasting information and the subscriber information, and generating and transmitting the broadcasting information message including the broadcasting information to the digital broadcasting receiving terminal of the subscriber according to the subscriber information.

3. The system as claimed in claim 2, wherein the controller extracts the information on the broadcasting program corresponding to the desired broadcasting program information and additional broadcasting program information from the EPG data.

4. The system as claimed in claim 3, wherein the broadcasting program information includes at least one of information on the channel through which the broadcasting program is broadcast, the broadcasting program service provider, the title of the broadcasting program and the starting time and broadcasting duration of the broadcasting program.

5. The system as claimed in claim 3, wherein the broadcasting information message generator receives the broadcasting information, the broadcasting program information and the subscriber information, and generates the broadcasting information message including the broadcasting information in the subscriber's terminal in accordance with the subscriber information.

6. The system as claimed in claim 2, wherein the broadcasting information message generator inserts a teleservice Identifier, TID, which has been previously assigned to the digital broadcasting receiving terminal, into the broadcasting information message so that the digital broadcasting receiving terminal can recognize that the generated message is a broadcasting information message.

7. The system as claimed in claim 1, wherein the digital broadcasting receiving terminal comprises a digital multimedia broadcasting receiver for receiving the EPG data and digital broadcasting data, which includes various broadcasting program data, a teleservice Identifier, TID, extractor for extracting TID of received message, a terminal controller for determining whether the received message is a broadcasting information message by using the extracted teleservice ID, and extracting broadcasting information from the broadcasting information message, if a broadcasting information message is received.

8. The system as claimed in claim 7, further comprising a broadcasting information extractor for extracting the broadcasting program information according to the broadcasting information from the EPG data.

9. The system as claimed in claim 7, wherein the terminal controller changes the current channel to the channel through which a specific broadcasting program is broadcast according to the extracted broadcasting information or executes the reservation setting for the specific broadcasting program, according to a user's choice.

10. The system as claimed in claim 9, wherein the terminal controller changes the channel to the channel through which the specific broadcasting program is broadcast according to whether the present time is when the specific broadcasting program is broadcast, or the reservation setting of the specific broadcasting program.

11. The system as claimed in claim 10, wherein the reservation setting is either a viewing reservation or a recording reservation.

12. The system as claimed in claim 1, wherein the broadcasting information message uses one of a Short Messaging Service, SMS, message, a Multimedia Messaging Service, MMS, message and a Wireless Application Protocol, WAP, PUSH message.

13. A method for providing broadcasting program information in a system for providing the broadcasting program information, which includes a digital broadcasting station for broadcasting Digital Multimedia Broadcasting, DMB, data and Electronic Program Guide, EPG, data guide information on broadcasting programs, a broadcasting information service provider for generating and transmitting a broadcasting information message including the broadcasting information specific to a broadcasting program selected by existing subscribers, and a digital broadcasting receiving terminal for receiving the broadcasting information message and extracting the broadcasting information from the received broadcasting information message, the method comprising the steps of:
receiving the EPG data by the broadcasting information service provider;
searching for the broadcasting program according to a broadcasting program type selected by the existing subscribers, and extracting the broadcasting information corresponding to the searched broadcasting program from the received EPG data;
creating the broadcasting information message including the extracted broadcasting information, and transmitting the created broadcasting information message to the existing subscribers;
receiving the broadcasting information message by the digital broadcasting receiving terminal;
extracting the broadcasting information from the received broadcasting information message; and
performing either switchover from a current channel to a channel through which a specific broadcasting program is broadcast, or a reservation setting for the specific broadcasting program by using the extracted broadcasting information, according to whether or not a present time is a time when the specific broadcasting program is being broadcasted.

14. The method as claimed in claim 13, wherein enabling the broadcasting information service provider to search for the broadcasting information according to the broadcasting program type, which the existing subscribers select, and extract the broadcasting information from the received EPG data, corresponding to the searched broadcasting program, further comprises:
searching for the broadcasting program according to the type of broadcasting program that the existing subscribers select from the EPG data by the broadcasting information service provider ;
extracting the broadcasting information corresponding to the searched broadcasting program; and
extracting additional broadcasting program information corresponding to the extracted broadcasting information.

15. The method as claimed in claim 14, wherein the broadcasting program information is at least one of the information on the channel through which the broadcast program is broadcast, the broadcasting program service provider, the title of the broadcasting program, the starting time and broadcasting duration of the broadcasting program.

16. The method as claimed in claim 15, wherein when extracting the broadcasting information from the received broadcasting information message by the digital broadcasting receiving terminal, the digital broadcasting receiving terminal extracts the broadcasting information and at least a portion of broadcasting program information.

17. The method as claimed in claim 12, wherein receiving the broadcasting information message by the digital broadcasting receiving terminal further comprises:
detecting, by the digital broadcasting receiving terminal, whether the received message includes a teleservice ID, TID, corresponding to the broadcasting information message; and
recognizing the message as the broadcasting information message if the TID corresponding to the broadcasting information message is included in the received message.

18. The method as claimed in claim 13, wherein extracting the broadcasting information from the received broadcasting information message by the digital broadcasting receiving terminal further comprises:
searching for the broadcasting program corresponding to the broadcasting information from the EPG data by the digital broadcasting receiving terminal ;
extracting the broadcasting program information, which is additional information on the searched broadcasting information and includes at least one of the information on the channel through which the searched broadcasting program is broadcast, the broadcasting program service provider, the title of the broadcasting program and the starting time and broadcasting duration of the broadcasting program.

19. The method as claimed in claim 16, wherein changing the current channel or reserving the specified broadcasting program further comprises:
determining whether the present time is when the broadcasting program corresponding to the broadcasting information is not being broadcasted by the digital broadcasting receiving terminal;
executing one of a plurality of reservation settings for viewing and recording according to a user's choice if it is determined that the present time is when the broadcasting program is not being broadcasted.

20. The method as claimed in claim 19, wherein checking the broadcasting time further comprises changing the current channel to a channel through which the broadcasting program is broadcast by the digital broadcasting receiving terminal, if it is determined that the present time is when the broadcasting program is being broadcasted.

21. The method as claimed in claim 13, wherein the broadcasting information message uses one of message services including Short Messaging Service, SMS, Multimedia Messaging Service, MMS, and Wireless Application Protocol, WAP, PUSH message service.
